# EUROPEAN PATENT APPLICATION

(11) **EP 3 339 374 A1**
(43) Date of publication of application: **27.06.2018**
(21) Application number: 17208981.5
(22) Date of filing: 20.12.2017
(51) Int. Cl.: C08L 77/02, C08L 77/06

(54) **RESIN COMPOSITION AND INSERT MOLDED PRODUCT**

(30) Priority: 26.12.2016 JP 2016251678
(71) Applicant: JTEKT Corporation, Osaka-shi, Osaka 542-8502 (JP)
(72) Inventor: KUNISHIMA, Takeshi, Osaka-shi, Osaka 542-8502 (JP)
(74) Representative: Winter, Brandl, Fürniss, Hübner, Röss, Kaiser, Polte - Partnerschaft mbB

(57) **Abstract**

A resin composition includes a polyamide resin, an elastomer having a carboxyl moiety, a carbodiimide group, and reinforcing fibers whose surfaces are treated with an aminosilane coupling agent. An insert molded product includes a metal insert member, and a resin part having the resin composition fixed to a surface of the insert member.

## Description

### BACKGROUND OF THE INVENTION

### 1. Field of the Invention

The present invention relates to a resin composition, and an insert molded product including a resin part containing the resin composition.

### 2. Description of Related Art

A polyamide resin is lightweight and has excellent heat resistance and is widely used for various industrial components. In the field of vehicles, it is used for various housing members such as a housing of a torque sensor, a rack housing, and the like constituting an electric power steering (EPS) system, or a housing of an electric oil pump (EOP) for idling stop, various gears such as a speed reducer gear for electric power steering, a bearing resin cage, a door roller (a resin wound bearing) of a slide door car, and a reservoir tank of hydraulic or electric hydraulic power steering. In recent years, these members have often been supplied as insert molded products designed such that parts in which stress is generated such as a thread part and a fitting part are made of a metal and the other parts are made of a resin.

For example, Japanese Patent Application Publication No. 2014-209032 (JP 2014-209032A) discloses a speed reducer gear (an insert molded product) which includes a metallic annular core and a gear main body surrounding an outer periphery of the annular core, in which the gear main body includes teeth formed of a resin composition containing no mineral filler or inorganic reinforcing agents and containing (a) at least one type of polyamide, (b) 5 to 12 weight% of at least one type of impact modifier, and (c) 0.5 to 3 weight% of at least one type of polycarbodiimide, and the impact modifier (b) has a carboxyl moiety.

In Japanese Patent Application Publication No. 2014-29304 (JP 2014-29304 A), a torque detection device including a magnetism collecting holder, a first magnetism collecting ring, an annular magnetism collecting unit, and a sensor housing is disclosed. The magnetism collecting holder is formed in an annular shape by molding a resin. The first magnetism collecting ring is attached to an inner peripheral surface of the magnetism collecting holder. The magnetism collecting unit includes a magnetic shield formed by bending a metal plate and attached to an outer peripheral surface of the magnetism collecting holder. The sensor housing is integrally molded with the magnetism collecting unit using a resin poured around the outer circumference of the magnetism collecting unit.

In an insert molded product, due to a difference in coefficient of linear expansion between a metal and a resin material, the resin material is restrained by an insert metal component when the resin material contracts, and stress tends to concentrate. Therefore, in particular, when heat shock (thermal shock) is applied, cracks may occur in the resin material around the metal component and cracking may progress further, which causes the resin to break. As a countermeasure therefor, for example, it is conceivable to design a thick resin material around the metal component. However, such a design is not preferable in consideration of the size reduction and the high output in vehicle components in recent years because it increases the size and weight of the product. On the other hand, when an insert molded product is used for a housing of a vehicle component and the like, in particular, high rigidity is required.

In this regard, while obtaining both toughness and rigidity in a resin was studied in the invention in JP 2014-209032 A, there is an expectation of further improvement. Reinforcing fibers such as glass fibers may be added in order to improve the rigidity of the resin. However, when reinforcing fibers are simply added, there is a risk of toughness being reduced conversely.

### SUMMARY OF THE INVENTION

One object of the present invention is to provide a resin composition that can improve toughness while maintaining higher rigidity than in the related art and to provide an insert molded product that is hard to break and has excellent heat shock resistance while maintaining higher rigidity than in the related art.

A resin composition according to an aspect of the present invention includes a polyamide, an elastomer having a carboxyl moiety, a carbodiimide group, and reinforcing fibers whose surfaces are treated with an aminosilane coupling agent.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of components of a resin composition of the present invention;
FIG. 2A is a diagram illustrating a method of quantitatively determining residual carbodiimide;
FIG. 2B is a diagram illustrating a method of quantitatively determining residual carbodiimide;
FIG. 2C is a diagram illustrating a method of quantitatively determining residual carbodiimide;
FIG. 2D is a diagram illustrating a method of quantitatively determining residual carbodiimide;
FIG. 2E is a diagram illustrating a method of quantitatively determining residual carbodiimide;
FIG. 2F is a diagram illustrating a method of quantitatively determining residual carbodiimide;
FIG. 3 is a diagram illustrating interactions of a polyamide resin, an elastomer, a carbodiimide, and reinforcing fibers;
FIG. 4 is a diagram illustrating a process of preparing resin pellets;
FIG. 5 is a diagram schematically showing a rack housing according to an embodiment of the present invention;
FIG. 6 is a diagram showing tensile elongations at break of examples, reference examples, and a comparative example;
FIG. 7 is a diagram showing tensile break energies of examples, reference examples, and a comparative example;
FIG. 8 is a diagram showing Charpy impact strengths of examples, reference examples, and a comparative example;
FIG. 9 is a diagram showing tensile strengths of examples and reference examples;
FIG. 10 is a diagram showing tensile elastic moduli of examples and reference examples;
FIG. 11A and FIG. 11B are SEM images of resin pellets obtained in Example 4 and Reference Example 4;
FIG. 12A is a diagram showing an IR spectrum for explaining reactivity between an acid-modified elastomer and a carbodiimide;
FIG. 12B is a diagram showing an IR spectrum for explaining reactivity between an acid-modified elastomer and a carbodiimide; and
FIG. 12C is a diagram showing an IR spectrum for explaining reactivity between an acid-modified elastomer and a carbodiimide.

### DETAILED DESCRIPTION OF EMBODIMENTS

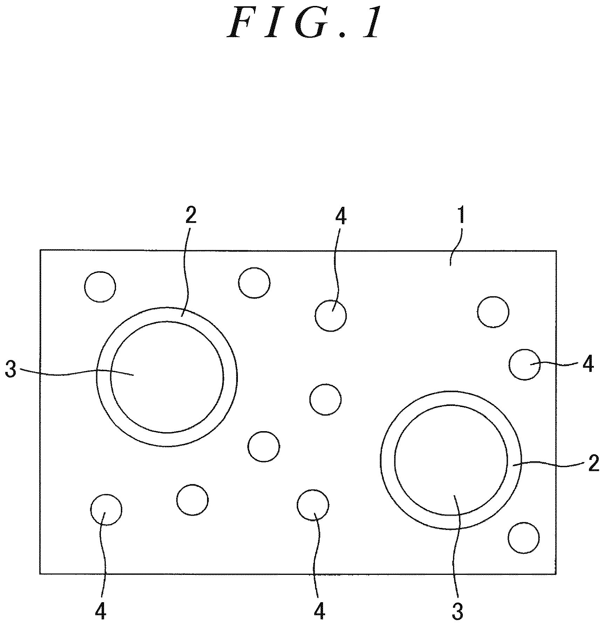

Embodiments of the present invention will be described below in detail. A resin composition of the present invention includes a polyamide resin, an elastomer, a carbodiimide group, and reinforcing fibers. Specifically, as shown in FIG. 1, reinforcing fibers 3 whose surfaces are treated with an aminosilane coupling agent 2 are contained in a polyamide resin 1 serving as a matrix resin, and an elastomer 4 is dispersed around the reinforcing fibers 3. Such a state of the resin can be observed using, for example, a resin composition scanning electron microscope (SEM) image. While it is difficult to observe the carbodiimide group in the SEM image, as will be described below, the presence of the carbodiimide group can be confirmed from peaks appearing in an IR spectrum (by infrared absorption spectrometry) of the resin composition.

The elastomer 4 has a dispersion diameter that is, for example, 400 nm or less, and preferably 50 nm to 250 nm. The dispersion diameter can be obtained by, for example, a method shown the following steps (1) to (3).
(1) A molded body of the resin composition is cut and broken up and the molded body including a cut surface is immersed in an organic solvent in which an elastomer component dissolves, but polyamide does not dissolve.
(2) This immersion state is continued for about 24 hours.
(3) Then, on the cut surface, a mark of an elastomer that is released due to dissolution is observed in an SEM image, and the diameter of the release mark is manually measured.

Examples of the polyamide resin include aliphatic polyamides (such as PA6, PA66, PA46, PA12, PA612, PA610, PA11, and PA410), and aromatic polyamides (PA6T, PA9T, PA10T, and PAMXD6). Among them, an aliphatic polyamide is preferable, and polyamide 66 (PA66) is more preferable. These can be used alone or in a combination of two or more. A number average molecular weight Mn calculated by a GPC method or a solution viscosity method of the polyamide resin is, for example, 15,000 to 25,000. A weight proportion of the polyamide resin is, for example, 45 mass% to 90 mass%, with respect to a total weight of the resin composition.

The elastomer may be, for example, a carboxyl substituted polyolefin which is a polyolefin having a carboxyl moiety bonded to the polyolefin at either the main chain itself or a side chain of the polyolefin. The "carboxyl moiety" means a carboxyl group such as one or more of a dicarboxylic acid, diester, dicarboxylic acid monoester, acid anhydride, monocarboxylic acid, ester, and a salt. This may be a carboxylate which is a neutralized carboxylic acid.

Among them, a preferable elastomer is, for example, a dicarboxyl substituted polyolefin which is a polyolefin having a dicarboxyl moiety bonded to the polyolefin at either the main chain itself or a side chain of the polyolefin. The "dicarboxyl moiety" means a dicarboxyl group such as one or more of a dicarboxylic acid, diester, dicarboxylic acid monoester, and acid anhydride. A preferable polyolefin is a copolymer of ethylene and one or more additional olefins and the additional olefins are hydrocarbons herein.

The elastomer is preferably based on an olefin copolymer such as an ethylene/α-olefin polyolefin. Examples of an olefin suitable for preparing an olefin copolymer include alkenes having 2 to 8 carbon atoms such as ethylene, propylene, 1-butene, 1-heptene, and 1-hexene. Diene monomers such as 1,4-hexadiene, 2,5-norbornadiene, 1,7-octadiene and/or dicyclopentadiene may be optionally used for preparing polyolefins. A preferable olefin copolymer is a polymer derived from ethylene and at least one type of α-olefin having 3 to 6 carbon atoms. A particularly preferable polyolefin is an ethylene 1-butene copolymer (EBR) prepared from ethylene/1-butene.

A carboxyl moiety may be introduced into an olefin copolymer and copolymerized with an unsaturated carboxyl-containing monomer so that an elastomer is formed during preparation of a polyolefin. The carboxyl moiety may be introduced by grafting a polyolefin using an unsaturated grafting agent having a carboxyl moiety such as an acid, ester, diacid, diester, acid ester or acid anhydride.

Examples of preferable unsaturated carboxyl-containing comonomers or grafting agents include maleic acid, maleic anhydride, maleic acid monoesters, a metal salt of maleic acid monoethyl ester, fumaric acid, fumaric acid monoethyl ester, itaconic acid, vinylbenzoic acid, vinylphthalic acid, methacrylic acid, methacrylic monoesters, a metal salt of fumaric acid monoethyl ester, methyl monoesters and diesters, propyl monoesters and diesters, isopropyl monoesters and diesters, butyl monoesters and diesters, isobutyl monoester and diester, hexyl monoester and diester, cyclohexyl monoester and diester, octyl monoester and diester, 2-ethylhexyl monoester and diester, decyl monoester and diester, stearyl monoester and diester, methoxyethyl monoester and diester, ethoxyethyl monoester and diester, hydroxy monoester and diester, or ethyl monoester and diester of maleric acid, fumaric acid and itaconic acid.

Among them, maleic anhydride is preferable. In this case, a degree of acid modification of maleic anhydride is preferably 1 or more and more preferably 1.5 or more and 4 or less. A degree of acid modification is determined by a combining ratio of acid components (such as maleic anhydride) when the elastomer is polymerized. More specifically, for elastomers having different degrees of acid modification, calibration curves for peak intensity of a -COOH group of an IR spectrum are generated and then measurement is performed for a sample whose degree of acid modification is unknown with IR. Then, the obtained IR spectrum is compared with the calibration curve, and conversion for an amount of unknown target sample added is performed, so that the degree of acid modification can be determined.

A preferable elastomer is an ethylene 1-butene copolymer grafted with an EBR polymer or maleic anhydride. A blend of a polyolefin such as polyethylene, polypropylene, and an EBR polymer and a polyolefin grafted with an unsaturated compound having a carboxyl moiety may be used as an elastomer. Examples of other preferable elastomers include an ionomer which is a carboxyl group-containing polymer partially neutralized with divalent metal cations such as zinc, manganese, or magnesium. A preferable ionomer is an ethylene/acrylic acid and ethylene/methacrylic acid copolymer partially neutralized with zinc.

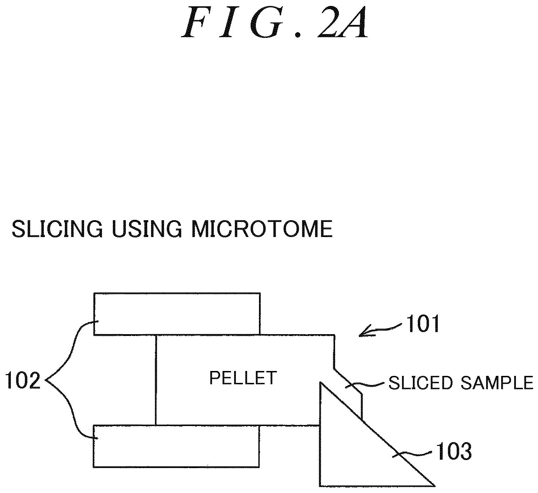

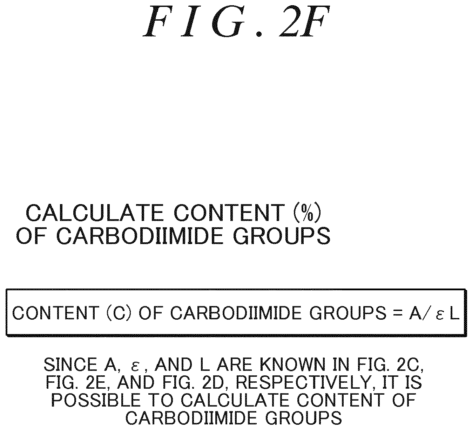

A weight proportion of an elastomer is, for example, 3 mass% to 20 mass%, with respect to a total weight of the resin composition. The carbodiimide group is a functional group represented by the formula (-N=C=N-). For example, 0.03 mass% to 0.33 mass%, and preferably 0.06 mass% to 0.25 mass% of carbodiimide groups is contained in the resin composition. A content of the carbodiimide group can be determined by, for example, applying the Lambert-Beer method according to the procedures in FIG. 2A to FIG. 2F.

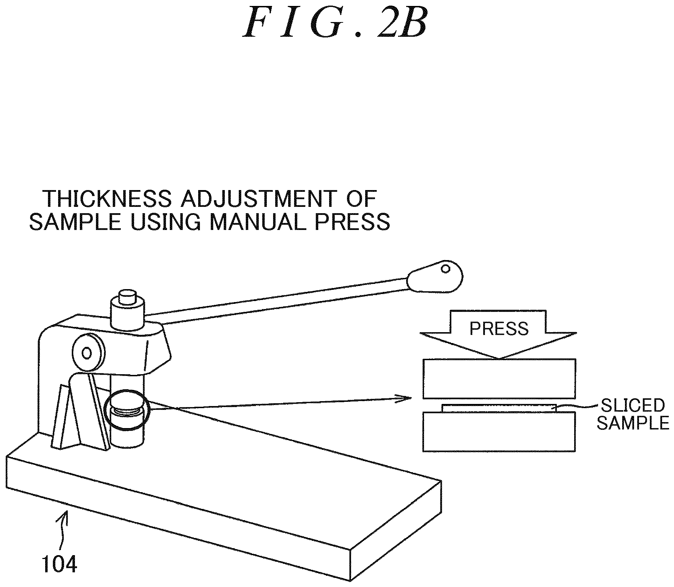

More specifically, first, as shown in FIG. 2A, a resin composition (for example, a pellet) is set in a clamp 102 of a microtome 101 and a sliced sample is cut out with a knife 103. Thus, a sample with a size of several tens of micrometers is prepared, for example. A device other than a microtome may be used in order to slice a resin pellet. Next, as shown in FIG. 2B, the thickness of the sliced sample that is cut out is further adjusted using a manual press 104. Then, the thickness of the sliced sample is measured using a micrometer or the like.

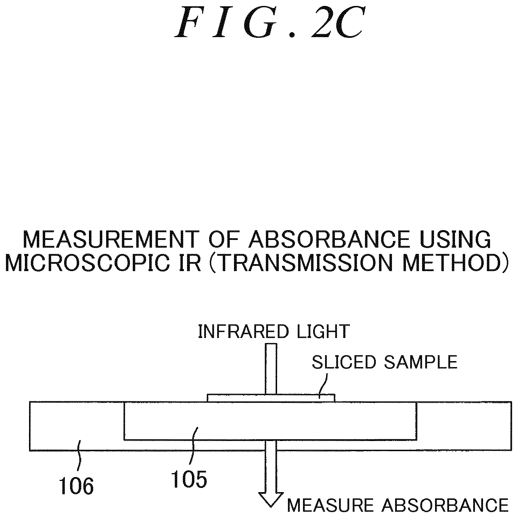

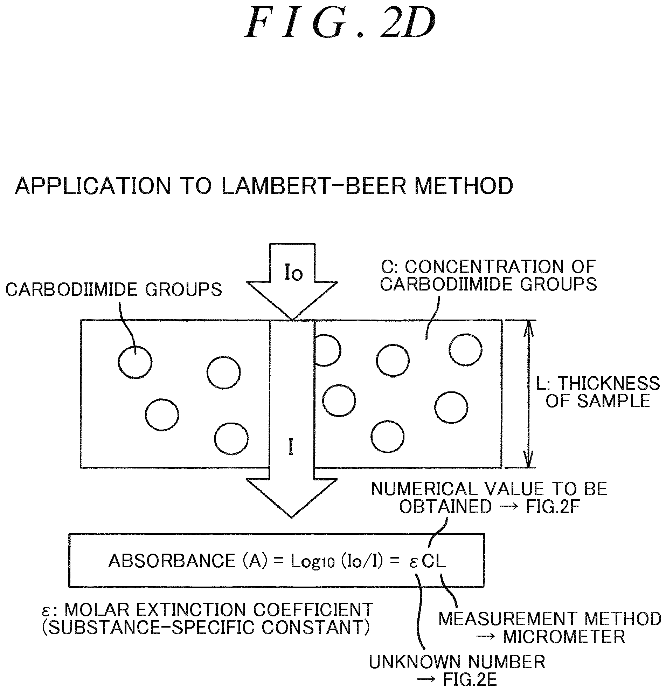

After the thickness is adjusted, as shown in FIG. 2C, the sliced sample is placed on a KBr plate 105, and is set on a pedestal 106 of an infrared spectroscopy (IR) photometer. Then, infrared light is emitted to the sliced sample and a peak intensity of the carbodiimide group (-N=C=N-) appearing around 2160 cm⁻¹ is measured. Next, as shown in FIG. 2D, the obtained absorbance (A) = Log₁₀(I₀/I), and the thickness L of the sliced sample measured previously are applied to the equation of the Lambert-Beer method: A = Log₁₀(I₀/I) = εCL. Here, I₀ is an incident light intensity, I is a transmitted light intensity, ε is a molar extinction coefficient of a carbodiimide group, and C is a concentration of carbodiimide groups in a sliced sample. A concentration C to be obtained is represented as C = A/εL. Here, since A is known according to the IR measurement and L is known according to measurement using a micrometer, an unknown number ε is obtained first.

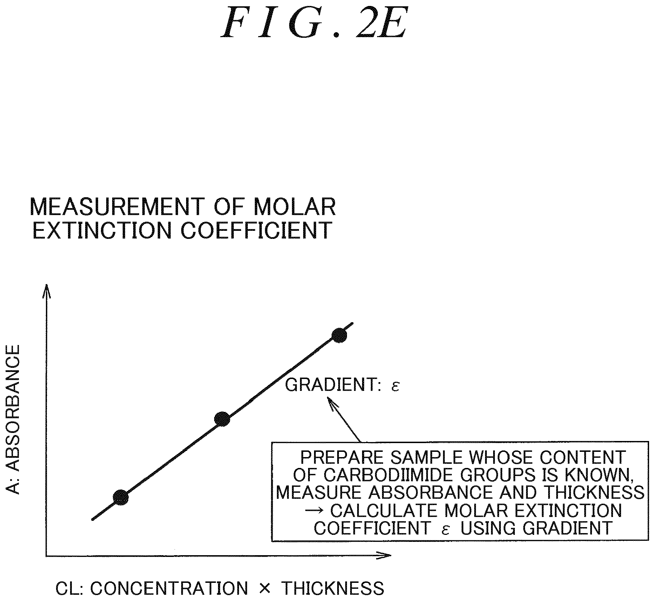

In order to obtain the molar extinction coefficient ε, for example, as shown in FIG. 2E, a plurality of pellets whose content (that is, the concentration C) of carbodiimide groups is known are used to prepare a sliced sample according to the procedures of FIG. 2A to FIG. 2D, and the thickness L is measured and the absorbance A is measured. Then, when the obtained values A and CL are plotted and the gradient is obtained from the plots, it is possible to obtain the molar extinction coefficient ε.

Next, when the obtained molar extinction coefficient ε, and the known absorbance and sample thickness L are assigned to C = A/εL, an amount of carbodiimide groups (-N=C=N-) contained in the resin pellets is obtained. Since there is no compound containing only a carbodiimide group, the amount of carbodiimide groups is estimated from a chemical structure and amount of a compound containing the carbodiimide group. Examples of the reinforcing fibers include various fibers such as carbon fibers and glass fibers. The reinforcing fibers include at least fibers whose surface are treated with an aminosilane coupling agent and may also include reinforcing fibers whose surfaces are not treated.

The aminosilane coupling agent is a silane in which a hydrolyzable group that reacts with an inorganic substance and a reactive functional group that reacts with an organic substance are bonded to one silicon atom (Si). Examples of the hydrolyzable group include an alkoxy group. Meanwhile, in the present invention, the reactive functional group is a functional group having at least one amino group (-NH₂). For example, when an object whose surface is to be treated is a glass fiber, a functional group having an amino group is oriented to the polyamide resin side while an alkoxy group of the aminosilane coupling agent reacts with the glass fiber. Thus, the affinity with the polyamide resin is enhanced. Examples of specific commercially available glass fibers whose surfaces are treated with an aminosilane coupling agent include "CS3DE-456S" (commercially available from Nitto Boseki Co., Ltd.).

A fiber length of the reinforcing fibers in a chopped strand state before kneading using a kneader 27 to be described below is, for example, preferably 0.5 mm to 10 mm, and more preferably 1 mm to 4 mm. A fiber diameter is, for example, preferably 4 µm to 25 µm and more preferably 5 µm to 13 µm. In the resin composition and an insert molded product to be described below, reinforcing fibers with a fiber length of 1 mm or less may be present due to breakage in the kneader 27.

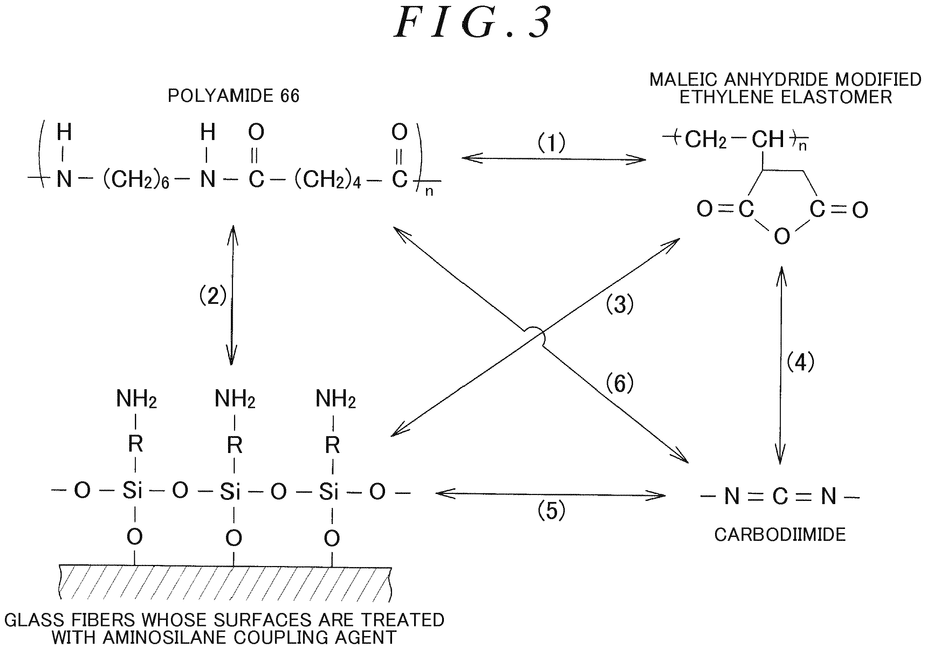

A weight proportion of the reinforcing fibers is, for example, 10 mass% to 60 mass%, with respect to a total weight of the resin composition. In the resin composition of the present invention, as shown in FIG. 3, a polyamide resin, an elastomer, a carbodiimide group, and reinforcing fibers may interact with one another. In FIG. 3, for convenience, a case in which the polyamide resin is polyamide 66, the elastomer is a maleic anhydride modified ethylene elastomer, and the reinforcing fibers are glass fibers is shown as an example.

For example, interactions shown in (1) to (3) in FIG. 3 may form a dehydrated condensed structural unit between the terminal amino group (-NH₂) of polyamide 66 and the maleic anhydride group (-MAH) of maleic anhydride modified ethylene elastomer, between the terminal carboxyl group (-COOH) of polyamide 66 and the amino group (-NH₂) of aminosilane coupling agent on the glass fibers, and between the maleic anhydride group (-MAH) of the maleic anhydride modified ethylene elastomer and the amino group (-NH₂) of the aminosilane coupling agent on the glass fibers. An interaction indicated by (4) in FIG. 3 may impart a crosslinked structure to a maleic anhydride modified ethylene elastomer based on the action of the carbodiimide group (-N=C=N-). An interaction indicated by (5) in FIG. 3 may impart a crosslinked structure to the aminosilane coupling agent on the glass fibers based on the action of the carbodiimide group (-N=C=N-). In an interaction (6) in FIG. 3, a reaction of the terminal carboxyl group (-COOH) and the amino group (-NH₂) of the polyamide resin with the carbodiimide group and a reaction between the terminal carboxyl group (-COOH) and the terminal amino group (-NH₂) of the polyamide resin may proceed based on the action of the carbodiimide group (-N=C=N-) so that the polyamide resin has a high molecular weight.

Thus, with the resin composition of the present invention, at least four components: polyamide 66, the maleic anhydride modified ethylene elastomer, the carbodiimide group and the aminosilane coupling agent on the glass fiber, have high mutual reactivity. Accordingly, in addition to an increase in molecular weight of polyamide 66 based on the action of the carbodiimide group (interaction (6)), the maleic anhydride modified ethylene elastomer can be finely dispersed in the polyamide 66, and the adhesion strength between the polyamide 66 and the maleic anhydride modified ethylene elastomer (interaction (1)) can be increased. It is also possible to increase the adhesion strength between the polyamide 66 and the maleic anhydride modified ethylene elastomer through the carbodiimide group and the amino group of the aminosilane coupling agent (interactions (4) + (6) and interactions (3) + (2)). Thus, it is possible to improve the extensibility of the resin part itself of the resin composition. In addition, it is possible to increase the adhesion strength between the polyamide 66 and the aminosilane coupling agent on the glass fibers through the maleic anhydride modified ethylene elastomer and the carbodiimide group (interactions (1) + (3) and interactions (6) + (5)). Thus, it is possible to improve the extensibility at the interface between the polyamide 66 and the glass fibers. As a result, it is possible to improve the toughness of the resin composition even though glass fibers are contained therein. Of course, it is also possible to improve the rigidity since the glass fibers are contained therein.

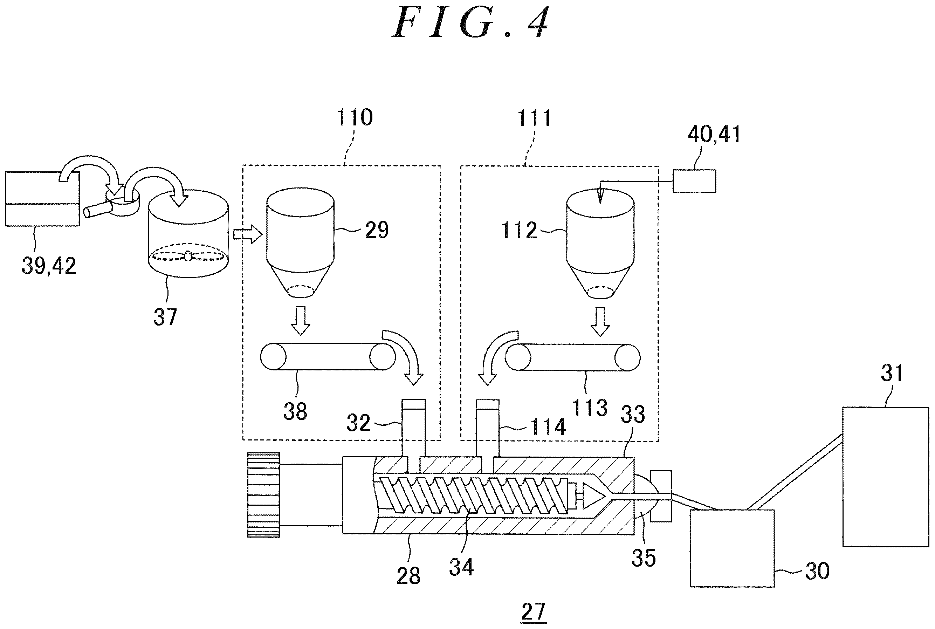

Next, a method of preparing resin pellets of the resin composition will be described. FIG. 4 is a diagram illustrating a process of preparing resin pellets. For example, the kneader 27 shown in FIG. 4 is used to prepare resin pellets. The kneader 27 mainly includes, for example, a main body 28, a cooling water tank 30, and a pelletizer 31.

The main body 28 includes a main feeder 110, a side feeder 111, a cylinder 33, a screw 34, and a nozzle 35. The side feeder 111 is provided between the main feeder 110 and the nozzle 35 (on the downstream side of the main feeder 110). The main body 28 is not particularly limited, and known kneaders such as a twin-screw (multi-screw) extruder and a single screw extruder can be used.

The main feeder 110 includes a tank 29, a weighing scale 38, and an inlet 32. The side feeder 111 includes a tank 112, a weighing scale 113, and an inlet 114. A stirrer 37 is provided on the upstream side of the tank 29. A raw material mixed in in the stirrer 37 is supplied to the inlet 32 of the main feeder 110 through the tank 29 and the weighing scale 38 on the downstream side thereof.

In order to prepare the resin pellets, first, a polyamide resin 39 and an elastomer 42 are supplied to the cylinder 33 through the main feeder 110 serving as a common injecting port. The polyamide resin 39 and the elastomer 42 may be individually put into the tank 29 and then supplied, or may be mixed (dry-blended, and masterbatched) in the stirrer 37 and then supplied.

As the polyamide resin 39 and the elastomer 42, the polyamide resins and elastomers described above are used. A combining proportion of the polyamide resin 39 is, for example, 45 mass% to 90 mass%, with respect to a total amount of raw materials used for preparing the resin pellets. On the other hand, a combining proportion of the elastomer 42 is, for example, 3 mass% to 20 mass%, with respect to the total amount of raw materials used for preparing the resin pellets.

Then, the polyamide resin 39 and the elastomer 42 supplied to the cylinder 33 are kneaded by rotation of the screw 34. As kneading conditions, for example, a temperature of the cylinder 33 is 275°C to 325°C, and a rotational speed of the screw 34 is 100 rpm to 500 rpm. Next, reinforcing fibers 40 and a compound (hereinafter simply referred to as a "carbodiimide") 41 having a carbodiimide bond are simultaneously supplied to the cylinder 33 through the side feeder 111 serving as a common injecting port. Originally, it is difficult to knead reinforcing fibers into a polyamide resin having a high molecular weight. However, according to the method of the present embodiment, since the resin can be kneaded in a low viscosity state, it is possible to mix the reinforcing fibers thereinto.

Examples of the reinforcing fibers 40 to be used include the reinforcing fibers described above. A combining proportion of glass fibers is, for example, 10 mass% to 60 mass%, with respect to the total amount of raw materials used for preparing the resin pellets. The carbodiimide 41 to be used is not particularly limited as long as it is a compound having a carbodiimide group (-N=C=N-). The carbodiimide 41 may be a monocarbodiimide having one carbodiimide group or a polycarbodiimide having a plurality of carbodiimide groups. In addition, as the carbodiimide 41, any type of carbodiimide such as an aliphatic carbodiimide, an aromatic carbodiimide, and a carbodiimide-modified product can be used. Among them, the carbodiimide 41 is preferably an aromatic carbodiimide. Examples of specific commercially available product thereof include "Stabaxol (Stabaxol P-100)" (commercially available from LANXESS). When the carbodiimide 41 is an aromatic carbodiimide, it is possible to reduce a (chain) reaction rate of the polyamide resin 39 during kneading of the polyamide resin 39, the reinforcing fibers 40, and the carbodiimide 41 due to a steric hindrance effect of the aromatic ring and the surrounding functional group. Therefore, management (of the temperature of the cylinder 33, a kneading time, and a pressure during kneading, for example) for causing 0.03 mass% to 0.33 mass% of carbodiimide groups to remain in the resin pellets becomes easier.

A combining proportion of the carbodiimide 41 is, for example, 0.5 mass% to 4 mass%, with respect to the total amount of raw materials used for preparing the resin pellets. When the carbodiimide 41 is blended in in this range, it is possible to favorably obtain a molded product having a number average molecular weight Mn of 30,000 or more as a final molded product. Since the content of the carbodiimide 41 is not excessive, it is possible to reduce risks such as an increase in resin pressure (viscosity) during kneading, generation of heat, and thermal decomposition of the polyamide resin 39 and the carbodiimide 41 due to the heat generated, and a decrease in adhesion strength in the resin due to deterioration in binding of the reinforcing fibers 40.

When the carbodiimide 41 is a powder, the carbodiimide 41 may be individually supplied from the side feeder 111 or may be mixed (dry-blended, and masterbatched) with a polyamide resin and then supplied. Then, the reinforcing fibers 40 and the carbodiimide 41 are added to a kneaded material including the polyamide resin 39 and the elastomer 42 being transferred within the cylinder 33, and additionally kneaded. A time from when the carbodiimide 41 is supplied until the kneaded material is injected from the nozzle 35 (a kneading time of the carbodiimide 41) is, for example, 1 second to 1 minute. Therefore, a distance of the side feeder 111 from the nozzle 35 may be set based on the kneading time. When the carbodiimide 41 is supplied, the interaction (6) in FIG. 3 occurs, and a reaction of the terminal carboxyl group (-COOH) and the amino group (-NH₂) of the polyamide resin 39 (polyamide 66 in FIG. 3) with the carbodiimide group and a reaction between the terminal carboxyl group (-COOH) and the terminal amino group (-NH₂) of the polyamide resin 39 proceed. Thus, polymer chains of the polyamide resin 39 can be connected in a chain manner.

After the carbodiimide 41 is supplied, the kneaded material is injected in the form of a strand from the nozzle 35, cooled and solidified in the cooling water tank 30, and then pelletized by a pelletizer 31. Through the process described above, the resin pellets including the polyamide resin 39 in which the reinforcing fibers 40 are dispersed is obtained. In the preparing process described above, since the polyamide resin 39, the elastomer 42, the carbodiimide 41, and the reinforcing fibers 40 are kneaded in one system, these four components can interact with one another.

For example, as shown in FIG. 3, based on the action of the carbodiimide group, it is possible to increase a molecular weight of the polyamide 66 (interaction (6)). Further, the maleic anhydride modified ethylene elastomer can be finely dispersed in the polyamide 66, and the adhesion strength between the polyamide 66 and the maleic anhydride modified ethylene elastomer can be increased (interaction (1)). Thus, it is possible to improve extensibility of the resin part of the resin composition.

Further, it is possible to increase the adhesion strength between the polyamide 66 and the aminosilane coupling agent on the glass fibers through the maleic anhydride modified ethylene elastomer and the carbodiimide group (interactions (1) + (3) and interactions (6) + (5)). Accordingly, it is possible to improve the extensibility at the interface between the polyamide 66 and the glass fibers. In the preparing process described above, the carbodiimide 41 is supplied to the cylinder 33 through the side feeder 111. Thus, it is possible to limit a time allowed for the reaction of the polyamide resin 39 based on the action of the carbodiimide group. That is, when the carbodiimide 41 is supplied through the main feeder 110, a reaction of the polyamide resin 39 proceeds while the resin during kneading moves from almost one end of the cylinder 33 to the other end. However, in this embodiment, the distance allowed for the reaction is reduced to a distance from the side feeder 111 to the nozzle 35, and thus it is possible to limit a time allowed for the reaction. As a result, in the obtained resin pellets, the carbodiimide group can easily remain in an unreacted state.

In the process described above, the carbodiimide 41 is supplied while the polyamide resin 39 and the reinforcing fibers 40 are kneaded. Therefore, compared to the case where the polyamide resin 39, the reinforcing fibers 40, and the carbodiimide 41 are simultaneously supplied to a kneader and kneading is started, or the case where the polyamide resin 39 and the carbodiimide 41 are simultaneously supplied through the main feeder 110 (first) of the kneader 27 and kneading is started, it is possible to reduce the occurrence of over-torque, heat generation, strand breakage, and resinous deposits (gum) on the main body 28. As a result, it is possible to stably produce the resin pellets.

The obtained resin composition (pellets) can be used for any structural member (molded product) containing a polyamide resin. Examples of the structural member include gears made of various resins, bearing cages, and various housings, may be exemplified. Specific examples of the structural member include a worm wheel, a worm housing, a rack housing, and a sensor housing for a power steering device, a resin winding guide bearing for a slide door, and a housing of an electric oil pump. Here, applications of the resin composition of the present invention are not limited to the specific examples described above.

Next, an example of the insert molded product of the resin composition of the present invention will be described with reference to the accompanying drawings.

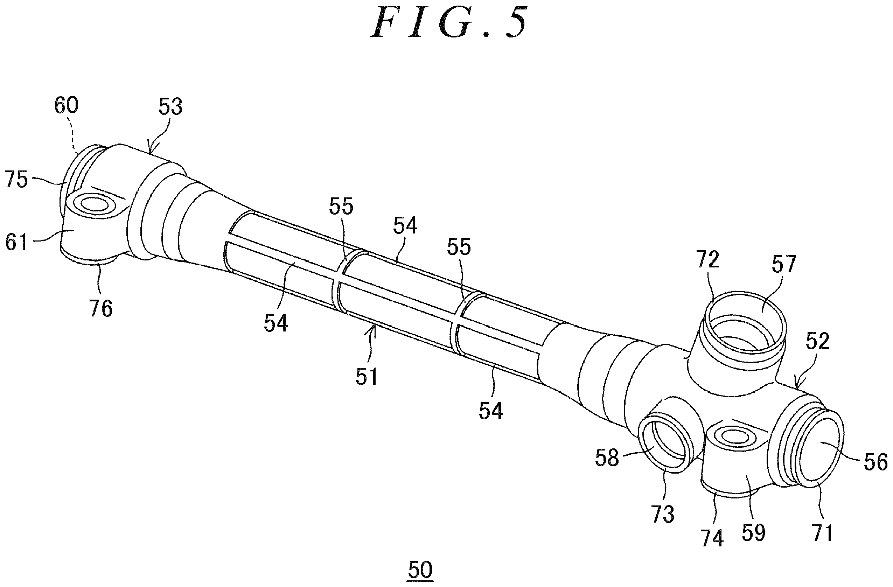

FIG. 5 is a diagram schematically showing a rack housing according to an embodiment of the present invention. FIG. 5 is merely an example of the insert molded product of the resin composition of the present invention. The resin composition can also be suitably used for various housing members such as a housing of a torque sensor and a housing of an electric oil pump (EOP) for idling stop.

With reference to FIG. 5, a rack housing 50 includes a cylindrical part 51 covering a rack shaft, and connecting parts 52 and 53 for other members, which are integrally connected to both ends of the cylindrical part 51. On the peripheral surface of the cylindrical part 51, a plurality of ribs 54 that extend in the axial direction of the cylindrical part 51 are provided at regular intervals. The ribs 54 are provided integrally across the entire length of the cylindrical part 51 in the axial direction. On the peripheral surface of the cylindrical part 51, ribs 55 orthogonal to two intermediate parts of the ribs 54 in the axial direction are provided. The ribs 55 are provided in an annular form along the entire circumference of the cylindrical part 51 to intersect the ribs 54.

The connecting part 52 is formed in a substantially tubular shape that is continuous from one end of the cylindrical part 51, and a side of the connecting part 52 opposite from the cylindrical part 51 has an opening 56 for one end of a rack shaft (not shown) to protrude to the outside of the rack housing 50. The opening 56 is integrally provided with a metal annular ring 71. The metal annular ring 71 reinforces the opening 56 and is used for attaching a boot (not shown) that closes the opening 56 while allowing a linear movement of the rack shaft.

In the outer periphery of the connecting part 52, an opening 57 into which a pinion shaft (not shown) is inserted and an opening 58 into which a rack guide (not shown) is inserted are formed. In addition, a mounting part 59 for fixing the rack housing 50 to a body of a vehicle protrudes. On the opening 57 and the opening 58, metal annular rings 72 and 73 for reinforcing the opening 57 and the opening 58 are integrally provided. On the mounting part 59, a metal annular ring 74 including a through-hole into which a bolt or the like for fixing the rack housing 50 is inserted is integrally provided.

The connecting part 53 is formed in a substantially tubular shape that is continuous from the other end of the cylindrical part 51, and a side of the connecting part 53 opposite from the cylindrical part 51 has an opening 60 for the other end of the rack shaft (not shown) to protrude to the outside of the rack housing 50. The opening 60 is integrally provided with a metal annular ring 75 for reinforcing the opening 60. On the outer periphery of the connecting part 53, a mounting part 61 for fixing the rack housing 50 to a body of a vehicle protrudes. On the mounting part 61, a metal annular ring 76 including a through-hole into which a bolt or the like for fixing the rack housing 50 is inserted is integrally provided.

The rack housing 50 described above can be obtained according to, for example, an insert molding process. More specifically, a mold including a retainer for holding the metal annular rings 71 to 76 (metal core) as an example of an insert member of the present invention is prepared. Then, while the metal annular rings 71 to 76 are held by the retainer, the mold is connected to an injection molding device. In this state, the resin composition of the present invention melted in the injection molding device is injected into a cavity of the mold and then cooled. Thus, the metal annular rings 71 to 76, the cylindrical part 51, and resin parts of the connecting parts 52 and 53 are integrated to obtain a molded product.

As described above, in the process in FIG. 4, in the stage of the resin pellets, a chain reaction of the polyamide resin in the resin pellets is at a mid-way stage, and a molecular weight thereof is lower than a molecular weight of the final molded product. Since the viscosity of the polyamide resin is relatively low and molding is easily performed in this state, it is not necessary to set the molding temperature to be excessively high. Therefore, it is possible to prevent thermal decomposition of the resin and reduce variation in molecular weight and physical properties of the molded product.

In this embodiment, 0.03 mass% to 0.33 mass% of unreacted carbodiimide groups is intentionally left in the resin pellets obtained in the process in FIG. 4. Accordingly, when the resin pellets are subjected to injection molding, the action of the unreacted carbodiimide group can cause, with the molding temperature, a reaction of the terminal carboxyl group (-COOH) and the amino group (-NH₂) of the polyamide resin 39 with the carbodiimide group and a reaction between the terminal carboxyl group (-COOH) and the terminal amino group (-NH₂) of the polyamide resin 39 to proceed. Thus, polymer chains of a plurality of pieces of polyamide resin 39 previously formed by polymerization or polymer chains of a plurality of pieces of polyamide resin 39 that become continuous due to the action of the carbodiimide group when the resin pellets are prepared can be additionally connected in a chain manner, and it is possible to increase the molecular weight of the resin. For example, it is possible to increase the number average molecular weight Mn of the resin parts of the cylindrical part 51, and the connecting parts 52 and 53 after molding to 30,000 or more.

In this embodiment, a process of kneading the raw materials of the resin pellets and a process of molding the resin pellets are regarded as a series of heating processes. Through the entire series of heating processes, the chain reaction of the polyamide resin 39 proceeds to an appropriate stage, and the molecular weight of the polyamide resin 39 can be increased to a level that has not been reached in the related art. When the molecular weight increases, it is possible to improve extensibility of the resin part of the rack housing 50. In addition, as shown in FIG. 3, it is possible to increase the adhesion strength between the polyamide 66 (the polyamide resin 39) and the maleic anhydride modified ethylene elastomer (the elastomer 42) (interaction (1)). Furthermore, it is possible to increase the adhesion strength between the polyamide 66 and the aminosilane coupling agent on the glass fibers (the reinforcing fibers 40) through the maleic anhydride modified ethylene elastomer and the carbodiimide group (the carbodiimide 41) (interactions (1) + (3) and interactions (6) + (5)). Thus, it is possible to improve the extensibility at the interface between the polyamide 66 and the glass fibers.

As a result, when the rack housing 50 is prepared, even if the stress concentrates on the resin parts due to a difference in coefficients of linear expansion between the metal annular rings 71 to 76 and the resin parts of the cylindrical part 51 and the connecting parts 52 and 53, it is possible to favorably stretch the resin parts, thereby reducing the occurrence of cracks. Thus, the rack housing 50 is hard to break and can exhibit excellent heat shock resistance while maintaining higher rigidity than in the related art.

While one embodiment of the present invention has been described above, the present invention can be realized in other forms. Examples of the elastomer having a carboxyl moiety include an olefin-based elastomer. However, the elastomer is not limited thereto, and may be, for example, a styrene-based elastomer. Weight proportions of the polyamide, elastomer, carbodiimide group, and reinforcing fibers described above are only examples, and they can be appropriately changed according to required specifications of a product.

In addition, various design modifications can be made within the scope of the appended claims.

Next, the present invention will be described with reference to examples, a comparative example, and reference examples. However, the present invention is not limited to the following examples.

Preparation of resin pellets (Examples 1 to 3, Comparative Example 1, and Reference Examples 1 to 5) will be described below. Raw materials according to formulations shown in the following Table 1 were supplied to the kneader 27 having the configuration shown in FIG. 4 to prepare resin pellets. Here, in Table 1, an amount of residual carbodiimide contained in the resin pellets was measured according to the procedures shown in FIG. 2A to FIG. 2F. In Table 1, the "functional group" indicates an amount of carbodiimide groups themselves contained in the resin pellets, and "converted into compound" indicates an amount of residual carbodiimide groups converted into the carbodiimide compound blended in.

**Table 1**

| | Polyamide resin | | | Glass fibers | | | Carbodiimide compound | | | Amount of carbodiimide remaining in pellets | | Elastomer | | | | |
|---|---|---|---|---|---|---|---|---|---|---|---|---|---|---|---|---|
| | Manufacturer | Grade | Mass proportion (mass%) | Manufacturer | Model number | Amount added (mass%) | Manufacturer | Model number | Amount added (mass%) | Mass% (converted into compound) | Mass% (functional group) | Manufacturer | Model number | Type | Degree of acid modification | Amount added (mass%) |
| Reference Example 1 | Asahi Kasei Chemicals Corporation | 1420S | 66.7 | Nitto Boseki Co., Ltd | CS3DE-456S | 33.3 | - | - | - | - | - | - | - | - | - | - |
| Reference Example 2 | | | 56.7 | | | | - | - | - | - | - | Mitsui Chemicals | TAFMER MH7020 | Maleic anhydride modified ethylene elastomer (EBR) | 2 | 10 |
| Reference Example 3 | | | 64.7 | | | | Nisshinbo Chemical Inc. | HMV-15C A (aliphatic) | 2 | 0 | 0 | - | - | - | - | - |
| Example 1 | | | 54.7 | | | | | | 2 | 0 | 0 | Mitsui Chemicals | TAFMER MH7020 | Maleic anhydride modified ethylene elastomer (EBR) | 2 | 10 |
| Example 2 | | | | | | | | | 2 | 0 | 0 | Mitsui Chemicals | TAFMER MH7010 | Maleic anhydride modified ethylene elastomer (EBR) | 1 | 10 |
| Example 3 | | | | | | | | | 2 | 0 | 0 | Sumitomo Chemical Co., Ltd | BondFAST BF-7M | Ethylene/ glycidyl methacrylate/ methacrylate copolymer | - | 10 |
| Reference Example 4 | | | | | | | | | 2 | 0 | 0 | LANXESS | Keltan 5470P | Non-modified EPDM | - | 10 |
| Example 4 | | | | | | | LANXESS | StabaxolP-100 (aromatic) | 2 | 0.6 | 0.1 | Mitsui Chemicals | TAFMER MH7020 | Maleic anhydride modified ethylene elastomer (EBR) | 2 | 10 |
| Comparative Example 1 | | 1702 | 100 | | | | - | - | - | - | - | - | - | - | - | - |

Evaluation will be described below.

### (1) Preparation of test piece

Under standard molding conditions for unreinforced nylon resins, ISO test pieces (thickness 4.0 mm × length 175 mm × width 20 mm) were molded using pellets obtained in the examples, a comparative example, and reference examples.

### (2) Measurement of physical properties

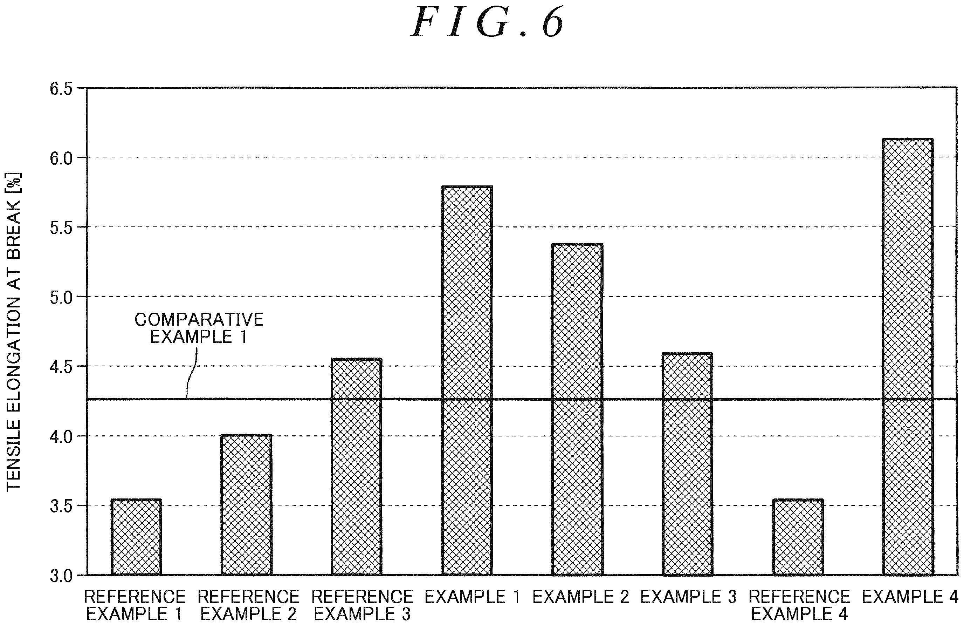

Physical properties of the test pieces obtained in (1) were measured. Results are shown in FIG. 6 to FIG. 10. The tensile elongation at break (tensile break energy) was measured according to ISO 527-1/-2. The Charpy impact strength was measured according to ISO 179/1eA. The tensile strength was measured according to ISO 527-1.

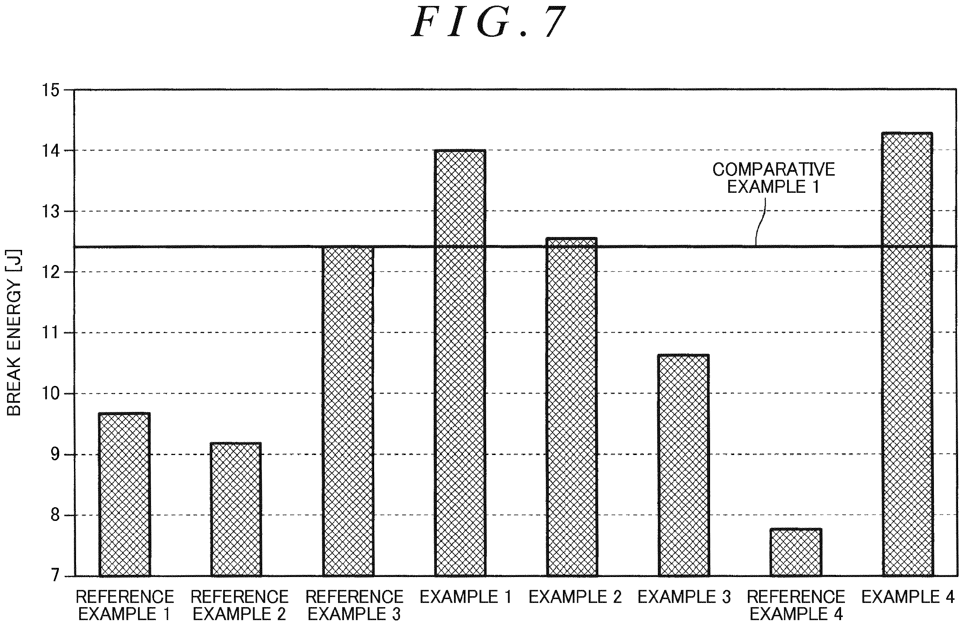

First, the polyamide resin used in Comparative Example 1 for comparison with the examples and reference examples had a relatively high molecular weight (Mn=57,000 (the molecular weight before molding and kneading)). When additives to the resins were the same, the toughness was generally excellent compared to the polyamide resins with a general molecular weight (Mn=23,000 (the molecular weight before molding and kneading)) used in the examples and reference examples. That is, from comparison between Reference Example 1 and Comparative Example 1, the same glass fibers were contained in the polyamide resins in both of the examples. However, as shown in FIG. 6 and FIG. 7, Comparative Example 1 exhibited higher tensile elongation at break and tensile break energy than Reference Example 1.

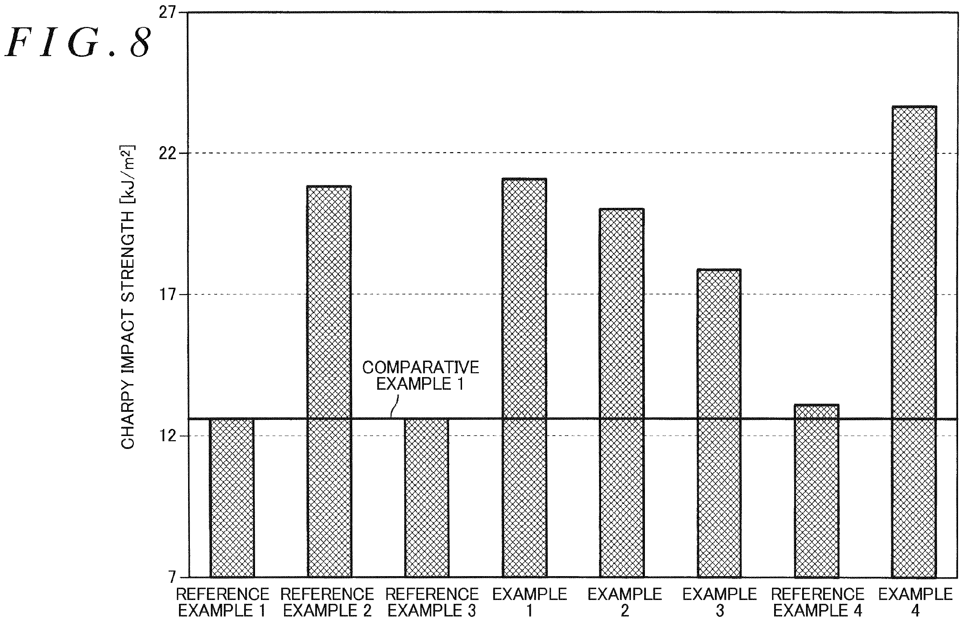

Next, from comparison between Reference Example 1 and Reference Example 2, when the maleic anhydride modified elastomer having compatibility with the polyamide resin was added, impact resistance (FIG. 8) was improved, but an effect of improving toughness (FIG. 6 and FIG. 7) was still weak. Thus, the toughness obtained in Reference Example 2 was not high as that of the polyamide resin having a high molecular weight. On the other hand, from comparison between Reference Example 1 and Reference Example 3, when the carbodiimide was added, the toughness (FIG. 6 and FIG. 7) was improved to the same level as in Comparative Example 1 but an effect of improving impact resistance was weak.

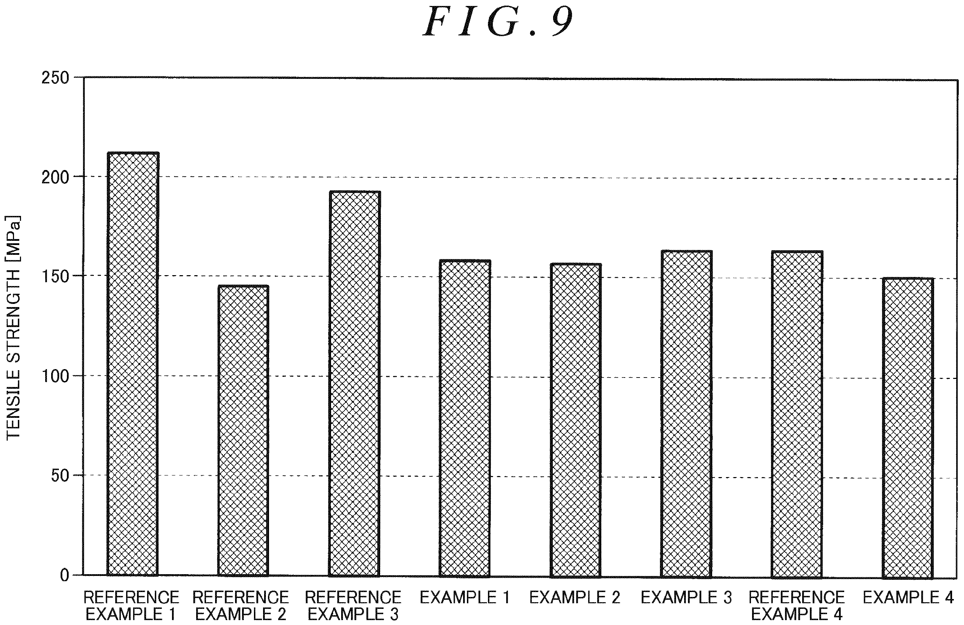

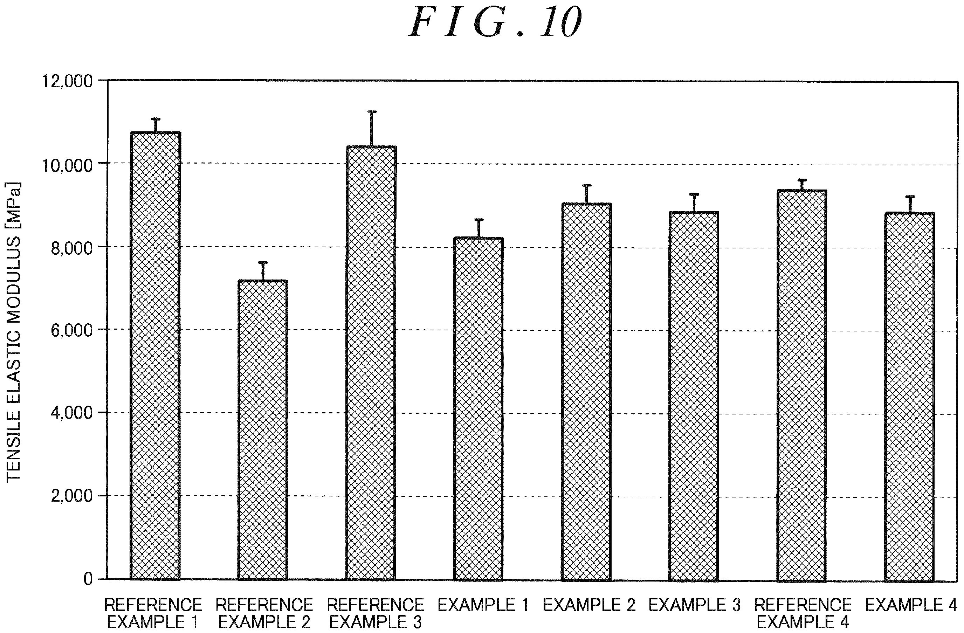

Next, from Example 1, a polyamide resin, glass fibers whose surfaces were treated with an aminosilane coupling agent, a carbodiimide, and a maleic anhydride modified elastomer were included together. Therefore, it was possible to obtain both excellent toughness (FIG. 6 and FIG. 7) and impact resistance (FIG. 8) which were not possible to be reached when any of these were not included. In addition, as shown in FIG. 9 and FIG. 10, a decrease in rigidity was suppressed. From comparison between Example 1 and Example 2, it was confirmed that a higher degree of acid modification of the maleic anhydride modified elastomer used was preferable in consideration of toughness (FIG. 6 and FIG. 7) and impact resistance (FIG. 8).

For the cases of adding an elastomer having a carboxyl moiety, it was found that, from comparison between Example 1 and Example 3, when an olefin-based elastomer having a maleic anhydride modified group was used, both toughness (FIG. 6 and FIG. 7) and impact resistance (FIG. 8) were excellent. From Reference Example 4, it was found that, even if an elastomer was added, when an elastomer having no carboxyl moiety was used, obtained toughness (FIG. 6 and FIG. 7) and impact resistance (FIG. 8) were lower than those in Reference Example 3 in which no elastomer was added.

For comparison between Example 1 and Example 4, an example in which an aromatic carbodiimide was used as a carbodiimide compound exhibited higher toughness (FIG. 6 and FIG. 7) and impact resistance (FIG. 8). Furthermore, when the aromatic carbodiimide was used, the viscosity when the resin was kneaded was low, strand breakage, resinous deposits (gums), and the like did not occur, and it was possible to stably produce the resin pellets.

### (3) The measurement results of the dispersion diameters of the elastomers were as follows.

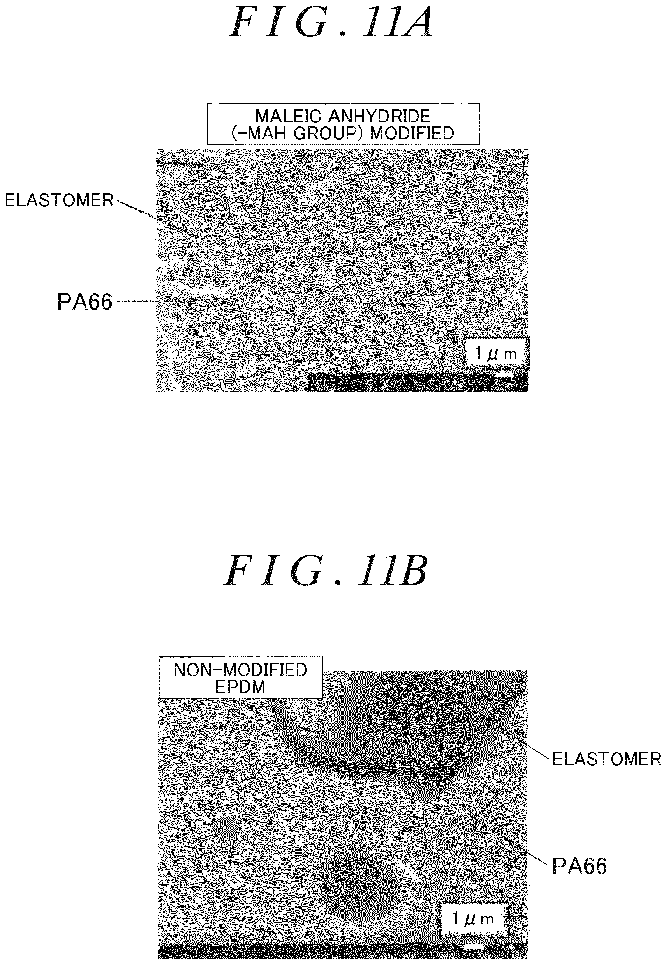

The dispersion diameters were measured from SEM images (FIG. 11A and FIG. 11B) of the resin pellets obtained in Example 4 and Reference Example 4. Diameters of about 100 marks of the elastomer released were manually measured based on the method shown in steps (1) to (3) described above, and an average value thereof was set as the dispersion diameter. As the measurement results, the dispersion diameter of the elastomer of Example 4 was about 180 nm, and the dispersion diameter of the elastomer of Reference Example 4 was about 5 µm to 10 µm. Based on the results, it was confirmed that, when the acid-modified elastomer was used as the elastomer, compatibility between the polyamide resin and the elastomer was improved and thus the elastomer was finely dispersed in the polyamide resin. That is, affinity between the polyamide resin and the elastomer was confirmed based on the fine dispersion.

IR analysis was as follows.

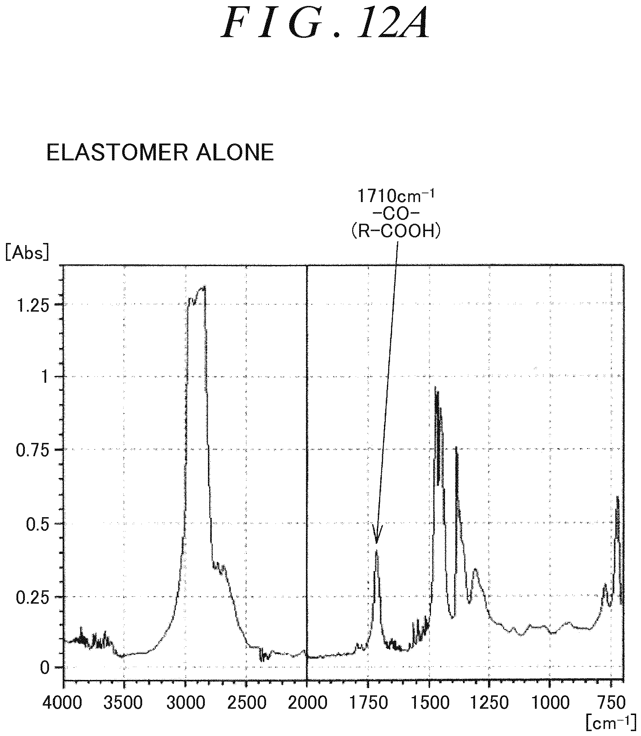

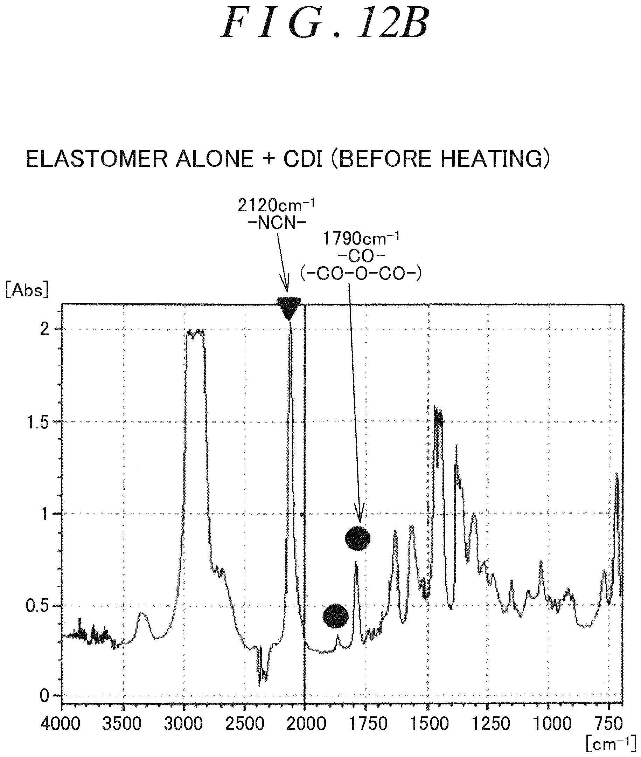

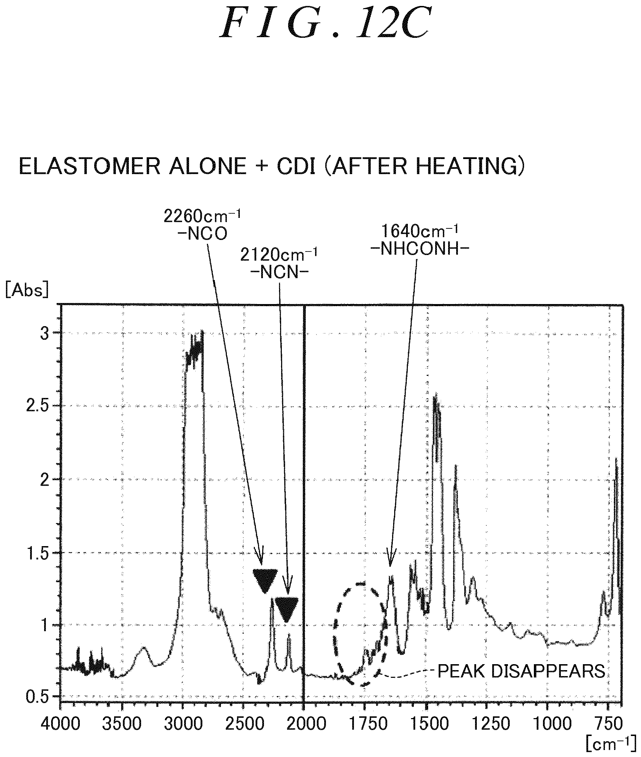

In order to check reactivity between the acid-modified elastomer and the carbodiimide, IR spectra of resins in stages of an elastomer alone, a mixture of an elastomer and a carbodiimide (CDI) (before heating), and a mixture of an elastomer and a carbodiimide (after heating) were measured. In order to simulate a mixed state in a twin-screw kneader, the mixture was obtained by causing the elastomer to be swollen in an organic solvent (such as toluene and hexane) so that an additive easily penetrated into the elastomer and then applying carbodiimide compound powder to the elastomer. Heating was performed using a differential scanning calorimetry (DSC) device from 0°C to 300°C at 10°C/min, and then the samples were held in the device for 10 minutes. The measurement results are shown in FIG. 12A to FIG. 12C. From comparison between FIG. 12B and FIG. 12C, when a mixture of the elastomer and the carbodiimide was heated, the carbodiimide groups (-N=C=N-) were consumed and a spectral peak of the carbodiimide group was lowered, but spectral peaks of the isocyanate group (-NCO) and the urea group (-NHCONH-) which were reaction by-products were observed. Based on the result, it was confirmed that reactivity between the acid-modified elastomer and the carbodiimide was high.

## Claims

1. A resin composition comprising:
a polyamide;
an elastomer having a carboxyl moiety;
a carbodiimide group, and
reinforcing fibers whose surfaces are treated with an aminosilane coupling agent.

2. The resin composition according to claim 1, wherein
the elastomer having a carboxyl moiety includes a maleic anhydride modified elastomer.

3. The resin composition according to claim 2, wherein
the maleic anhydride modified elastomer has a degree of acid modification of 1 or more.

4. The resin composition according to any one of claims 1 to 3, wherein
the carbodiimide group is bonded to an aromatic structure.

5. The resin composition according to any one of claims 1 to 4, wherein
the reinforcing fibers include glass fibers.

6. An insert molded product comprising:
an insert member; and
a resin part formed of the resin composition according to any one of claims 1 to 5 fixed to a surface of the insert member.
